(19) Europäisches Patentamt
European Patent Office
Office européen des brevets

(11) Veröffentlichungsnummer: **0 378 106 A2**

(12) # EUROPÄISCHE PATENTANMELDUNG

(21) Anmeldenummer: **90100148.7**

(51) Int. Cl.5: **C08G 73/10, C08G 77/42**

(22) Anmeldetag: **04.01.90**

(30) Priorität: **12.01.89 DE 3900674**

(43) Veröffentlichungstag der Anmeldung:
**18.07.90 Patentblatt 90/29**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Hedtmann-Rein, Carola, Dr.**
**Winzerweg 1**
**D-6945 Hirschberg(DE)**
Erfinder: **Heinz, Gerhard, Dr.**
**Im Vogelsang 2**
**D-6719 Weisenheim(DE)**

(54) **Hochtemperaturbeständige Polysulfon-Polyimid-Blockcopolykondensate, Verfahren zu ihrer Herstellung und ihre Verwendung.**

(57) Die Erfindung betrifft hochtemperaturbeständige Polysulfon-Polyimid-Blockcopolykondensate, die enthalten, bezogen auf die Summe von (A) und (B)

A) 5 bis 95 Mol-% Polyarylenethersulfonblöcke mit einem Zahlenmittelwert des Molekulargewichts $\overline{M}$ n im Bereich von 1500 bis 30000 und

B) 5 bis 95 Mol-% Polyimidblöcke mit einem Zahlenmittelwert des Molekulargewichts $\overline{M}$n von 300 bis 20000.

Die erfindungsgemäßen Polysulfon-Polyimid-Blockcopolykondensate zeigen im Vergleich zu Polysulfonen eine erhöhte Dauergebrauchstemperatur und verbesserte Lösungsmittelbeständigkeit. Durch die amorphen Polyimidblöcke bleibt die Transparenz der Polysulfonblöcke in den Blockcopolykondensaten erhalten.

Die Produkte finden beispielsweise Verwendung zur Herstellung von Formkörpern.

EP 0 378 106 A2

# Hochtemperaturbeständige Polysulfon-Polyimid-Blockcopolykondensate, Verfahren zu ihrer Herstellung und ihre Verwendung

Gegenstand der Erfindung sind hochtemperaturbeständige Blockcopolykondensate, die aufgebaut sind aus mindestens einem Polyarylenethersulfonblock (A) und mindestens einem Polyimidblock (B)

Polykondensationsprodukte mit aromatisch gebundenen Sulfongruppen sind bekannt aus Literatur- und Patentpublikationen. Verwiesen wird z.B. auf J. Chem. Soc. (1961), Seiten 1604 bis 1610; J. Polymer Sci (1959), 40, Seiten 399 bis 406 und die DE-B-1 545 106 (US-A- 4 175 175).

Polyarylenethersulfone besitzen gute mechanische Eigenschaften, beispielsweise Zähigkeit und Wärmealterungsbeständigkeit sowie gute elektrische Eigenschaften.

Statistische Ethersulfon-Etherketon-Copolymerisate mit wiederkehrenden Einheiten

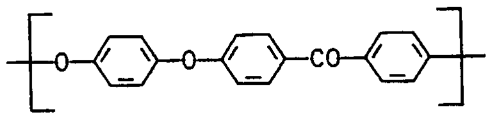

und

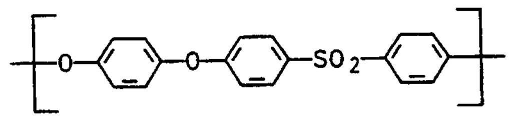

werden z.B. beschrieben in der EP-A-1879. Die Polykondensate sind erhältlich durch gleichzeitige Kondensation von Hydrochinon, 4,4′-Dichlorbenzophenon und 4,4′-Dichlordiphenylsulfon.

Bekannt sind ferner Arylenetherketon-Polykondensate mit Brückengliedern wie z.B. -CO-, -SO-, -S-, $-SO_2-$, -O-, Alkylen-, Cycloalkylen-, Arylen-, Alkyliden- oder -Cycloalkylidengruppen mit 2 bis 20 C-Atomen, z.B. aus der EP-A- 030 033 oder der EP-A-161 453.

Bekannt sind auch Polyimide. Eine zusammenfassende Übersicht über ihre Herstellung, Eigenschaften und Verwendung wird beispielsweise gegeben in der Monographie "Polyimides" Volume 1 and 2, herausgegeben von K.L. Mittal, Verlag Plenum Press, New York und London, 1971 und in Chemical Process Review No. 54, Polyimide Manufacture, 1971 von Dr. M.W. Ranney, Noyes Data Corporation, New Jersey. Die Herstellung von Polyimid-Polyarylenether-Sulfon-Copolymeren in aprotischen Lösungsmitteln durch Umsetzung von 2 Molen p-Aminophenol mit 1 Mol 3,3′-4,4′-Benzophenontetracarbonsäuredianhydrid zur Bis-phenolbenzophenondiamidodicarbonsäure, deren Dehydratisierung zum Bisphenol-benzophenondiimid und dessen Polykondensation mit 4,4′-Dichlordiphenylsulfon wird beschrieben in Polymer Preprints 25 (1984), Seiten 49 bis 51.

In der US-A-4 540 748 beschrieben werden aminterminierte Polyphenylethersulfone und deren Polykondensation mit aromatischen Tetracarbonsäuredianhydriden zu Polyetherimiden.

In den genannten Publikationen nicht erwähnt werden hingegen Polysulfon-Polyimid-Blockcopolykondensate.

Die Aufgabe der vorliegenden Erfindung bestand darin, die Stabilität von Polysulfonen bei einer längeren mechanischen Beanspruchung bei erhöhten Temperaturen zu verbessern. Verbessert werden sollte ferner die Lösungsmittelbeständigkeit der Polysulfone.

Diese Aufgabe konnte überraschenderweise gelöst werden durch Blockcopolykondensate, die Polyarylenethersulfonblöcke und Polyimidblöcke mit bestimmten Molekulargewichten und in bestimmten Mengenverhältnissen gebunden enthalten. Durch das An- bzw. Einkondensieren der nahezu oder im wesentlichen vollständig umschmelzbaren und unlöslichen Polyimidblöcke an bzw. zwischen Polyarylenethersulfonpolykondensate wurden Polyarylenethersulfon-Polyimid-Blockcopolykondensate erhalten, die eine deutlich höhere Stabilität bei einer Dauerbelastung im Temperaturbereich von 150 bis 180° C aufweisen und zusätzlich eine verbesserte Lösungsmittelbeständigkeit zeigen. Durch Einkondensieren amorpher Polyimidblöcke wurde die Transparenz der Polyarylenethersulfonblöcke nicht beeinträchtigt, d.h. die erfindungsgemäßen Polyarylenethersulfon-Polyimid-Blockcopolykondensate sind im Gegensatz zu Polysulfon-Blockcopolykondensaten mit Gehalten an kristallinen Polykondensatblöcken, wie z.B. Polyetherketon-, Polyphenylensulfid- oder Polycyanoaryletherblöcken, durchsichtig.

Gegenstand der Erfindung sind somit hochtemperaturbeständige Polysulfon-Polyimid-Blockcopolykondensate, die enthalten oder vorzugsweisen bestehen aus

A) 5 bis 95 Mol-%, vorzugsweise 35 bis 95 Mol-% und insbesondere 60 bis 95 Mol-%, bezogen auf die Summe von (A) und (B), Polyarylenethersulfonblöcken mit einem Zahlenmittelwert des Molekulargewichts $\overline{M}n$ im Bereich von 1 500 bis 30 000, aufgebaut aus Einheiten der allgemeinen Formel (I)

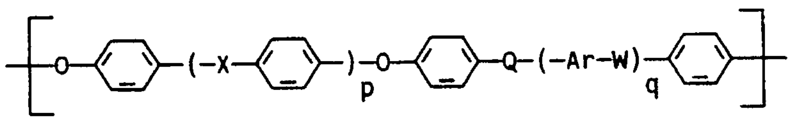

(I)

oder deren am Arylenrest mit Phenyl-, $C_1$-$C_6$-Alkyl- oder $C_1$-$C_6$-Alkoxygruppen, Chlor- oder Fluoratomen substituierten Derivate, wobei bedeuten:

Ar einen p-Phenylen- oder Diphenylenrest,

X, Q und W eine chemische Bindung oder gleiche oder verschiedene Brückenglieder aus der Gruppe $-SO_2$-, -O-, -S-, -CO- oder $CR^1R^2$- mit der Maßgabe, daß mindestens eines der Brückenglieder $-SO_2$- ist,

$R_1$ und $R_2$ gleich oder verschieden und jeweils Wasserstoffatome, $C_1$-$C_6$-Alkyl-, $C_1$-$C_6$-Alkoxygruppen, Phenylgruppen oder deren Fluor- oder Chlorderivate sind, und

p und q jeweils den Wert 0 oder 1 haben

und

B) 5 bis 95 Mol-%, vorzugsweise 5 bis 65 Mol-% und insbesondere 5 bis 40 Mol-%, bezogen auf die Summe von (A) und (B), Polyimidblöcke mit einem Zahlenmittelwert des Molekulargewichts $\overline{M}n$ von 300 bis 20000, aufgebaut aus Einheiten der Formeln

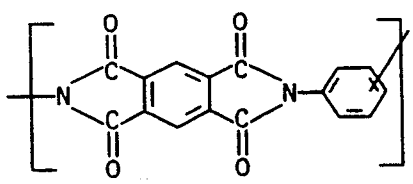

(II)

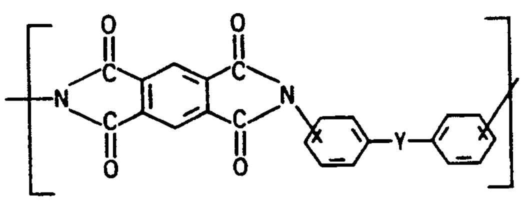

(III)

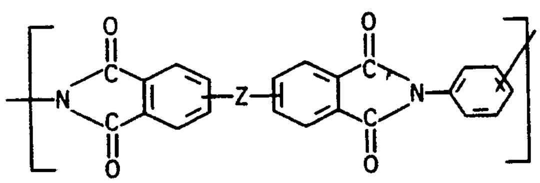

(IV)

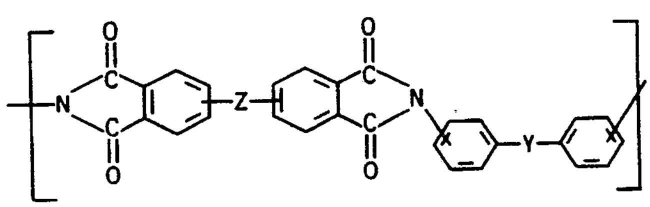

(V)

oder von Mischungen aus mindestens zwei verschiedenen Einheiten der Formeln (II) bis (V), wobei in den Formeln (III) bis (V) bedeuten:

Y eine chemische Bindung oder ein Brückenglied aus der Gruppe -O-, $-CH_2$-, $-C(CH_3)_2$-, $-CH(CH_3)$-, -CO-, $-SO_2$-,

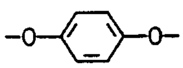 , 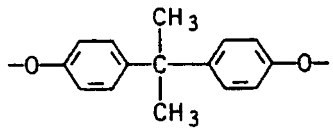 oder 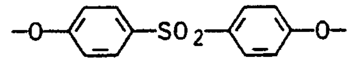 ,

Z eine chemische Bindung oder ein Brückenglied aus der Gruppe -O-, $-CH_2-$, $-C(CH_3)_2-$, -CO-, $-SO_2-$

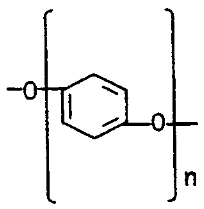 oder 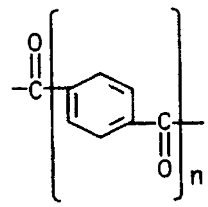

und

n die Zahl 1 oder 2, vorzugsweise 1.

Außerdem betrifft die Erfindung ein Verfahren zur Herstellung der hochtemperaturbeständigen Polysulfon-Polyimid-Blockcopolykondensate, das dadurch gekennzeichnet ist, daß

a) durch Polykondensation von aromatischen Dihalogenverbindungen, aromatischen Dihydroxyverbindungen der Formeln

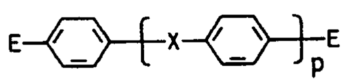 (Ia),

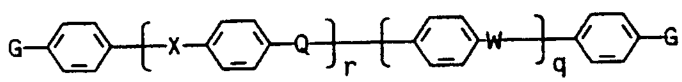 (Ib)

oder von Mischungen von Verbindungen der Formeln (Ia) und (Ib) und aromatischen Aminohydroxyverbindungen der Formel

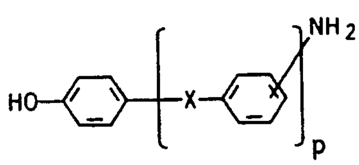 (Ic),

in polaren aprotischen Lösungsmitteln in Gegenwart von Alkalimetallcarbonaten Polyarylenethersulfonpolykondensate (A) mit endständigen Aminogruppen hergestellt werden, wobei in den Formeln (Ia) bis (Ic) bedeuten.

X, Q und W eine chemische Bindung oder gleiche oder verschiedene Brückenglieder aus der Gruppe $-SO_2-$, -O-, -S-, -CO- oder $-CR^1R^2-$ mit der Maßgabe, daß mindestens eines der Brückenglieder $-SO_2-$ ist,

$R^1$ und $R^2$ gleich oder verschieden und jeweils Wasserstoffatome, $C_1$-$C_6$-Alkyl-, $C_1$-$C_6$-Alkoxygruppen, Phenylgruppen oder ihre Fluor- oder Chlorderivate sind, und

p, q und r jeweils den Wert 0 oder 1 haben,

E und G Hydroxyl, Chlor oder Fluor sind mit der Maßgabe, daß das Verhältnis von Hydroxyl- und Aminoendgruppen zu Chlor- und/oder Fluorendgruppen im Bereich von 0,9:1 bis 1,1:1 liegt, und

b) an die erhaltenen aminterminierten Polyarylenethersulfonpolykondensate (A) Polyimidblöcke (B) ankondensiert werden durch Umsetzung mit aromatischen Tetracarbonsäuredianhydriden der Formeln

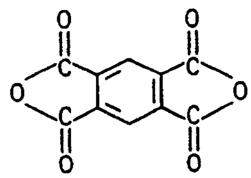 (IIa),

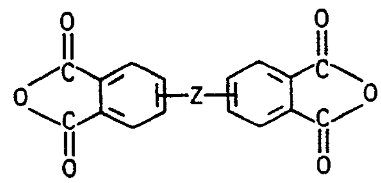 (IVa)

oder von Mischungen aus aromatischen Tetracarbonsäuredianhydriden der Formeln (IIa) und (IVa) und aromatischen Diaminen der Formeln

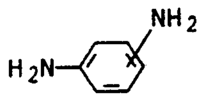 , (IIb),

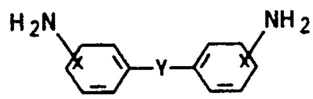 (IIIb)

oder von Mischungen aus aromatischen Diaminen mit den Formeln (IIb) und (IIIb) in polaren aprotischen Lösungsmitteln, wobei in den Formeln (IVa) und (IIIb) bedeuten:

Y eine chemische Bindung oder ein Brückenglied aus der Gruppe -O-, $-CH_2-$, $-C(CH_3)_2-$, $-CH(CH_3)-$, -CO-, $-SO_2-$,

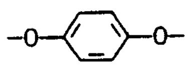 , 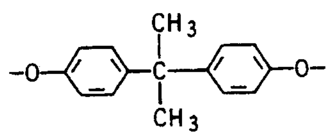 oder 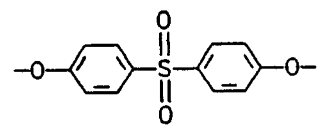 ,

Z eine chemische Bindung oder ein Brückenglied aus der Gruppe -O-, $-CH_2-$, $-C(CH_3)_2-$, -CO-, $-SO_2-$

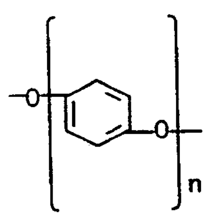 oder 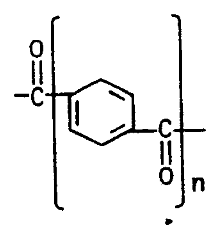 .

und

n die Zahl 1 oder 2, vorzugsweise 1,

und das Molverhältnis von aromatischen Tetracarbonsäuredianhydriden zu aromatischen Diaminen 1,02:1 bis 2:1 beträgt,

und anschließender Dehydratisierung oder intermediär gebildeten Polysulfon-Polyamidcarbonsäure-Blockcopolykondensate zu Polysulfon-Polyimid-Blockcopolykondensaten,

wobei die Monomeren (Ia) und/oder (Ib) und (Ic) und (IIa) und/oder (IVa) und (IIb) und/oder (IIIb) in solchen Mengen verwendet werden, daß die resultierenden Polyarylenethersulfonblöcke (A) und Polyimidblöcke (B) in Verhältnis der Molprozente von 95:5 bis 5:95 vorliegen.

Weitere Erfindungsgegenstände sind die Verwendung der hochtemperaturbeständigen Polysulfon-Polyimid-Blockcopolykondensate nach einem der Ansprüche 1 bis 6 zur Herstellung von Formkörpern und Formkörper, die enthalten oder bestehen aus hochtemperaturbeständigen Polysulfon-Polyimid-Blockcopolykondensaten nach einem der Ansprüche 1 bis 6.

Als Komponente (A) enthalten die erfindungsgemäßen Polysulfon-Polyimid-Blockcopolykondensate, wie bereits ausgeführt wurde, Polyarylenethersulfonblöcke aus Einheiten der allgemeinen Formel I

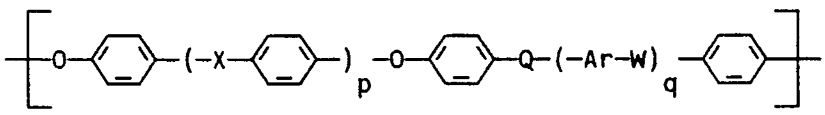

(I)

oder deren an den Arylenresten mit Phenyl-, Halogenphenylgruppen, wie z.B. Chlorphenylgruppen, $C_1$- bis $C_6$- Alkyl-, vorzugsweise $C_1$- bis $C_3$-Alkylgruppen oder den entsprechenden Fluor- oder Chlorderivaten, beispielsweise Methyl-, Ethyl-, n- und iso-Propyl-, Amyl-, Trichlormethyl- und/oder Trifluormethylgruppen oder $C_1$- bis $C_6$-Alkoxy-, vorzugsweise $C_1$- bis $C_3$-Alkoxygruppen oder den entsprechenden Fluor- oder Chlorderivaten, wie z.B. Methoxy-, Trifluormethoxy-, Ethoxy-, 2,2,2-Trichlorethoxy-, n- und iso-Propoxy-, Perfluorpropoxygruppen, substituierten Derivate. Bevorzugte Substituenten sind die Methyl-, Phenyl- und Trifluormethylgruppe.

In der Formel (I) bedeuten:

Ar einen p-Phenylen- oder Diphenylenrest,

X, Q und W Brückenglieder, die gleich oder verschieden oder eine chemische Bindung sein können und ausgewählt sind aus der Gruppe $-SO_2-$, -O-, -S-, -CO- oder $-CR^1R^2-$ mit der Maßgabe, daß mindestens eines der Brückenglieder $-SO_2-$ ist.

Die Reste $R^1$ und $R^2$ des Brückengliedes $-CR^1R^2-$ können gleich oder verschieden sein und jeweils bedeuten Wasserstoffatome, $C_1$- bis $C_6$-, vorzugsweise $C_1$- bis $C_3$-Alkylgruppen, $C_1$- bis $C_6$-Alkoxy-, vorzugsweise $C_1$- bis $C_3$-Alkoxygruppen und Phenylgruppen sowie die entsprechenden mit Halogenatomen, vorzugsweise Chlor- oder Fluoratomen, substituierten Derivate, wobei als Brückenglieder vorzugsweise die $-CH_2$-Gruppe und insbesondere die $-C(CH_3)_2$-Gruppe zu nennen sind. Geeignete $R^1$- und $R^2$-Reste sind beispielsweise die oben beispielhaft genannten Arylensubstituenten.

Neben der $-SO_2$-Gruppe haben sich als Brückenglieder insbesondere -O- und $-C(CH_3)_2$-bewährt, so daß diese vorzugsweise in den Polyarylenethersulfonblöcken (A) gebunden sind.

Die Parameter p und q können jeweils den Wert null oder 1 haben.

Das Molekulargewicht $\overline{M}n$ (Zahlenmittelwert) der Polyarylenethersulfonblöcke (A) liegt im Bereich von 1 500 bis 30 000, vorzugweise von 2 000 bis 25 000 und insbesondere von 3 000 bis 22 000.

Beispiele für Einheiten der Formel (I) der Polyarylenethersulfonblöcke (A) sind

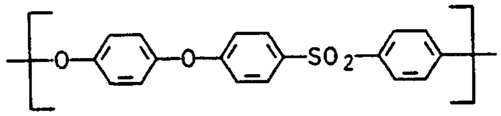

(I1)

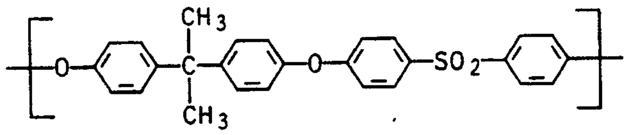

(I2)

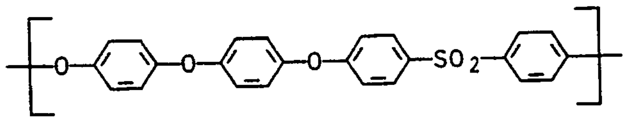

(I3)

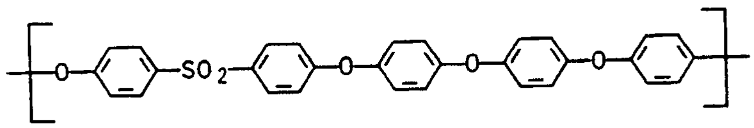

(I4)

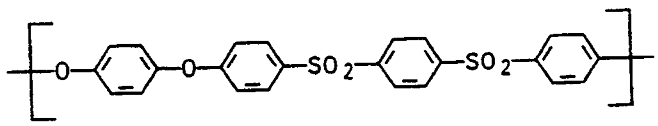

(I5)

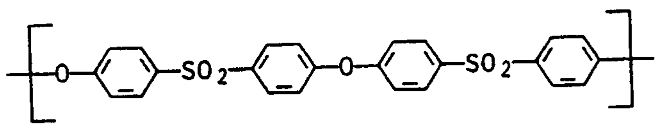

(I6)

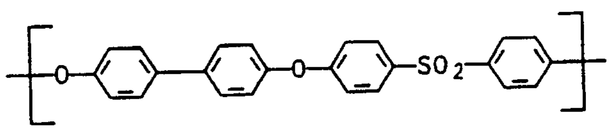

(I7)

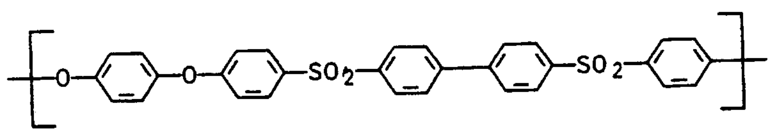

(I8)

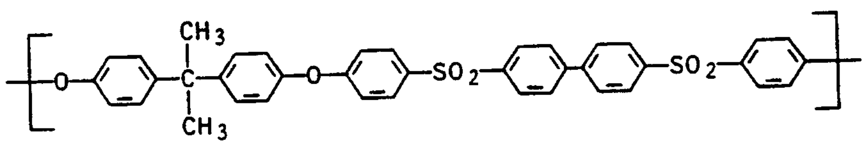

(I9)

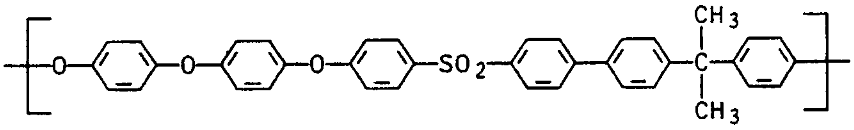
(I10)

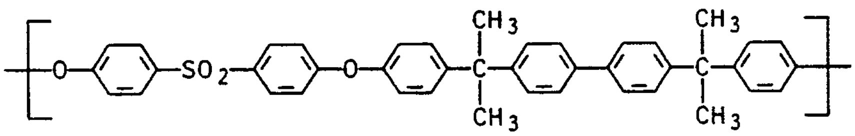
(I11)

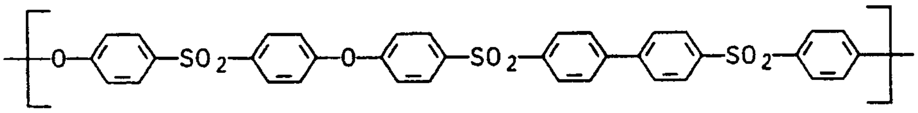
(I12),

wobei die Einheiten (I6) und (I2) bevorzugt sind und die beispielhaft genannte Auswahl nur stellvertretend für die unter die Formel (I) fallende Einheiten (I1) bis (I12) steht. Über den Arylenrest Ar, die Brückenglieder X, Q und W und die Parameter p und q lassen sich die vorstehenden Beispiele wie folgt beschreiben:

| | p | q | Ar | X | Q | W |
|---|---|---|---|---|---|---|
| I1 | 0 | 0 | - | - | $-SO_2-$ | - |
| I2 | 1 | 0 | - | $-C(CH_3)_2-$ | $-SO_2-$ | - |
| I3 | 1 | 0 | - | -O- | $-SO_2-$ | - |
| I4 | 1 | 1 | Phenylen | $-SO_2-$ | -O- | -O- |
| I5 | 0 | 1 | Phenylen | - | $-SO_2-$ | $-SO_2-$ |
| I6 | 1 | 0 | - | $-SO_2-$ | $-SO_2-$ | - |
| I7 | 1 | 0 | - | Chem. Bdg. | $-SO_2-$ | - |
| I8 | 0 | 1 | Diphenylen | - | $-SO_2-$ | $-SO_2-$ |
| I9 | 1 | 1 | Diphenylen | $-C(CH_3)_2-$ | $-SO_2-$ | $-SO_2-$ |
| I10 | 1 | 1 | Diphenylen | -O- | $-SO_2-$ | $-C(CH_3)_2-$ |
| I11 | 1 | 1 | Diphenylen | $-SO_2-$ | $-C(CH_3)_2-$ | $-C(CH_3)_2-$ |
| I12 | 1 | 1 | Diphenylen | $-SO_2-$ | $-SO_2-$ | $-SO_2-$ |

Sofern die Polyarylenethersulfonblöcke (A) aus mindestens zwei Einheiten (I1) bis (I12), vorzugsweise aus den Einheiten (I6) und (I2), bestehen, können die Copolykondensate, die Einheiten (I1) bis (I12), vorzugsweise die Einheiten (I6) und (I2) in statistischer Verteilung oder in Form von Blöcken gebunden enthalten.

Als Komponente (B) enthalten die erfindungsgemäßen hochtemperaturbeständigen Polysulfon-Polyimid-Blockcopolykondensate, wie ebenfalls bereits dargelegt wurde, Polyimidblöcke, die aufgebaut sind aus Einheiten der Formeln

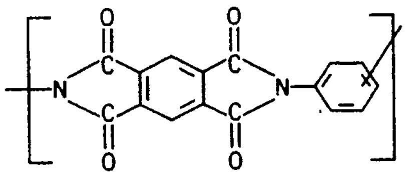

(II),

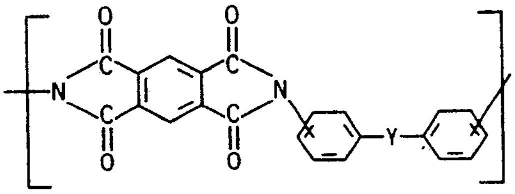

(III)

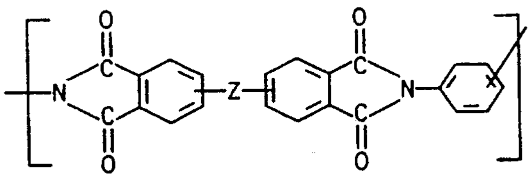

(IV),

oder

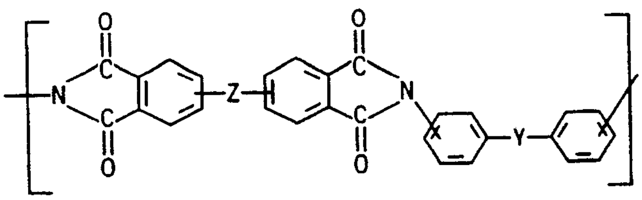

(V)

oder aus Mischungen aus mindestens zwei verschiedenen Einheiten der Formeln (II) bis (V), wobei die Arylenreste, vorzugsweise die Phenylenreste der aromatischen Diamine, analog den Polyarylenethersulfonblöcken (A) substituiert sein können mit Phenylgruppen, Halogenphenylgruppen, $C_1$- bis $C_6$-Alkyl-, vorzugsweise $C_1$- bis $C_3$-Alkylgruppen oder den entsprechenden Fluor- oder Chlorderivaten oder $C_1$- bis $C_6$-Alkoxy-, vorzugsweise $C_1$- bis $C_3$-Alkoxygruppen oder den entsprechenden Fluor- oder Chlorderivaten.

In den Formeln (III) bis (V) bedeuten ferner

Y eine chemische Bindung oder ein Brückenglied aus der Gruppe $-CH_2-$, $-CH(CH_3)-$, -CO-,

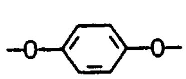 , 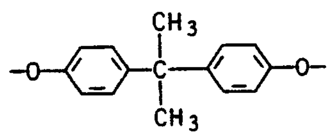 , 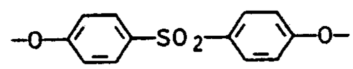 ,

vorzugsweise $-C(CH_3)_2-$ oder $-SO_2-$ und insbesondere -O-,

Z eine chemische Bindung oder ein Brückenglied aus der Gruppe -O-, $-CH_2-$, $-CH(CH_3)-$, $-SO_2-$

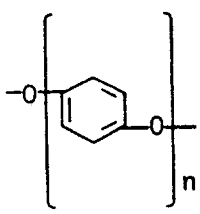

oder

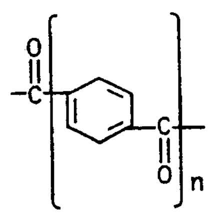

oder vorzugsweise -CO-

und

n die Zahl 1 oder 2, vorzugsweise 1.

Bevorzugt bestehen die Polyimidblöcke (II) bis (V) aus Einheiten der Formeln

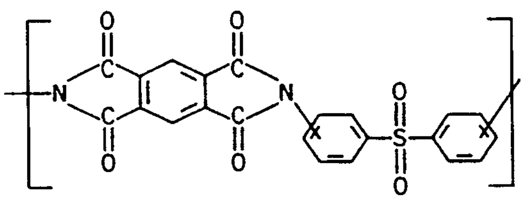

(III2)

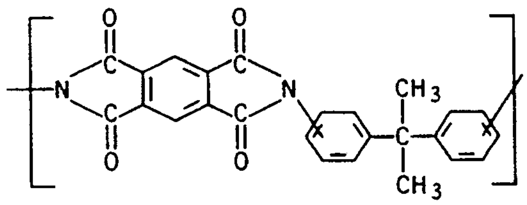

(III3)

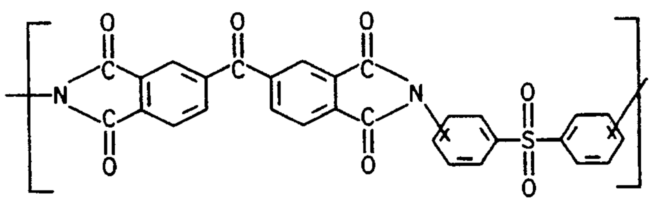

(V2)

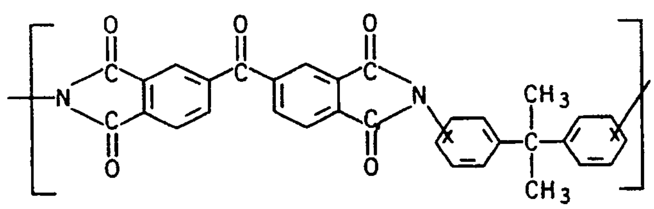

(V3)

und insbesondere

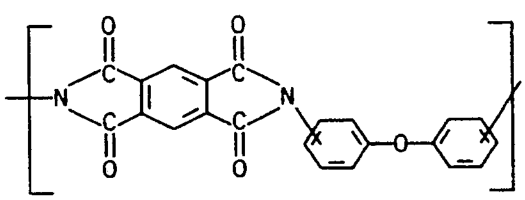

(III1)

oder

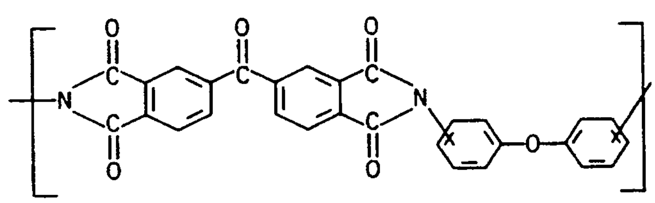

(V1)

oder aus Mischungen aus mindestens zwei Einheiten der Formeln (III1) bis (III3) und (V1) bis (V3), insbesondere aus Mischungen aus Einheiten der Formeln (III1) und (V1). Die oben genannte Auswahl der bevorzugt verwendeten Polyimideinheiten steht jedoch nur stellvertretend für die unter die Formeln (II) bis (V) fallenden Einheiten oder Mischungen davon.

Das Molekulargewicht $\overline{M}n$ (Zahlenmittelwert) der Polyimidblöcke (B), aufgebaut aus Einheiten der Formeln (II) bis (V) oder Mischungen davon, liegt im allgemeinen im Bereich von 300 bis 20000, vorzugsweise von 500 bis 18 000 und insbesondere von 1000 bis 15000.

Die erfindungsgemäßen hochtemperaturbeständigen Polysulfon-Polyimid-Blockcopolykondensate können kontinuierlich oder diskontinuierlich in einer einstufigen oder vorzugsweise zweistufigen Reaktion

hergestellt werden. Grundsätzlich können die Polyarylenethersulfonblöcke (A), insbesondere solche mit endständigen Aminogruppen, nach an sich bekannten, in der Literatur beschriebenen Verfahren, und Polyimidblöcke, insbesondere solche mit endständigen Anhydridgruppen, getrennt hergestellt und anschließend miteinander verknüpft werden oder aber die Blockcopolykondensate werden durch entsprechende aufeinanderfolgende Zugabe der Monomeren direkt synthetisiert.

Nach dem bevorzugt zur Anwendung kommenden zweistufigen Herstellungsverfahren werden aromatische Dihalogenverbindungen, aromatische Dihydroxyverbindungen und aromatische Aminohydroxyverbindungen in polaren aprotischen Lösungsmitteln in Gegenwart von Alkalimetallcarbonaten so polykondensiert, daß

in einer ersten Reaktionsstufe durch Umsetzung von Monomeren der Formeln (Ia) und/oder (Ib) und (Ic)

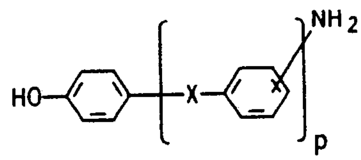

(Ic),

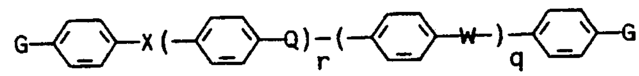

(Ib)

und

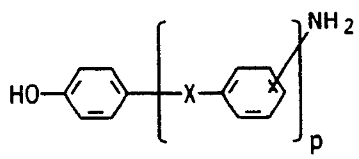

(Ic),

in welchen X, Q, W, p, q, r, E und G die vorgenannte Bedeutung haben, Polyarylenethersulfonpolykondensate (A) mit endständigen Aminogruppen hergestellt werden. Hierzu werden die Monomeren in solchen Mengen verwendet, daß das Verhältnis von Hydroxylendgruppen zu Chlor- und/oder Fluorendgruppen im Bereich von 0,9:1 bis 1,1:1, vorzugsweise 1,02:1 bis 0,98:1 liegt und das Molverhältnis von aromatischen Dihydroxyverbindungen zu aromatischen Aminohydroxyverbindungen in Abhängigkeit vom gewünschten Molekulargewicht des Polyarylenethersulfonblocks 61,5:1 bis 1,5:1, vorzugsweise 49:1 bis 9:1, beträgt.

An die erhaltenen Polyarylenethersulfonpolykondensate mit endständigen Aminogruppen werden in einer zweiten Reaktionsstufe durch Umsetzung mit aromatischen Tetracarbonsäuredianhydriden der Formeln

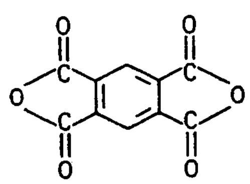

(IIa) und/oder

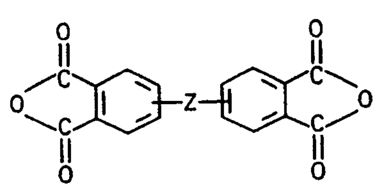

(IVa)

und aromatischen Diaminoverbindungen der Formeln

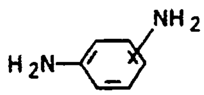

(IIb)

und/oder

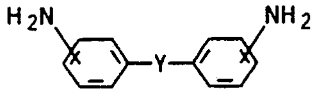

(IIIb)

in denen Y und Z die vorgenannte Bedeutung haben, Polyamidocarbonsäureblöcke ankondensiert. Das Molverhältnis von aminterminierten Polyarylenethersulfonpolykondensaten zu aromatischen Diaminoverbindungen liegt üblicherweise im Bereich von 1:20 bis 1:2 und vorzugsweise von 1:10 bis 1:3. In Abhängigkeit vom gewünschten Molekulargewicht der Polyamidocarbonsäureblöcke werden die aromatischen Tetracarbonsäureanhydride ((IIa) und/oder (IVa)) und aromatischen Diaminoverbindungen ((IIb) und/oder (IIIb)) und aminterminierten Polyarylenethersulfonpolykondensate in solchen Mengen verwendet, daß das Molverhältnis von Tetracarbonsäuredianhydriden zu aromatischen Diaminen 1,02:1 bis 2:1, vorzugsweise 1,20:1 bis 1,5:1 und das Verhältnis von Anhydrid- zu Aminogruppen 0,9:1 bis 1,1:1, vorzugsweise 0,98:1 bis 1,02:1 betragen.

Die gebildeten Polyarylenethersulfon-Polyamidocarbonsäureblockcopolykondensate werden anschließend in an sich bekannter Weise zu den erfindungsgemäßen Polysulfon-Polyimid-Blockcopolykondensaten dehydratisiert. Nach einer bevorzugten Ausführungsform wird die Dehydratisierung unter Zusatz von mindestens einem Carbonsäureanhydrid und in Gegenwart von tertiären aliphatischen, aromatischen oder heterocyclischen Aminen als Katalysator durchgeführt.

Als Beispiele für aromatische Dihydroxy- und Dihalogenverbindungen sowie aromatische Aminohydroxyverbindungen, die zur Herstellung der aminterminierten Polyarylenethersulfonpolykondensate eingesetzt werden können, seien stellvertretend genannt:

Dihydroxyverbindungen

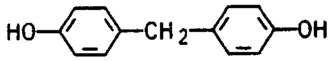

Bis-(4-hydroxyphenyl)methan

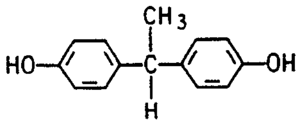

1,1-Bis(4-hydroxyphenyl)ethan

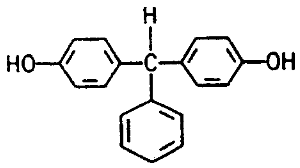

Phenyl-bis-(4-hydroxyphenyl)-methan

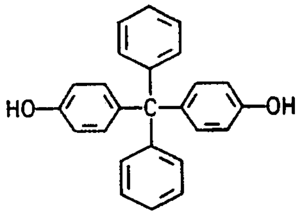

Diphenyl-bis-(4-hydroxyphenyl)methan

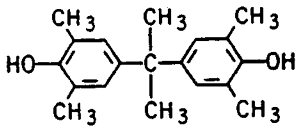

3,3',5,5'-Tetramethylbisphenol A

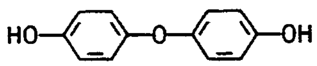

4,4′-Dihydroxydiphenylether

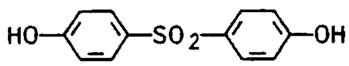

4,4′-Dihydroxydiphenylsulfon

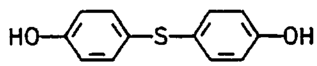

4,4′-Dihydroxydiphenylsulfid

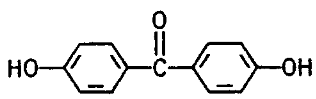

4,4′-Dihydroxybenzophenon

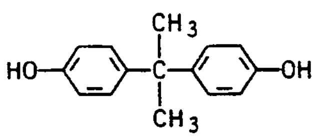

Bisphenol A

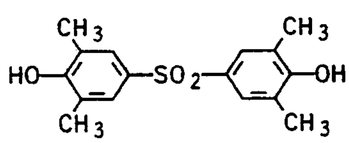

3,3,′5,5′-Tetramethylbisphenol S

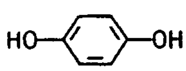

Hydrochinon

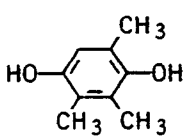

2,3,5-Trimethylhydrochinon

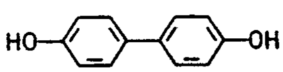

4,4′-Dihydroxydiphenyl

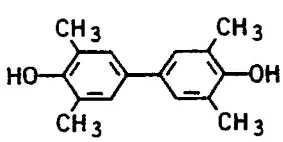

3,3′,5,5′-Tetramethyl-4,4′-dihydroxy-diphenyl

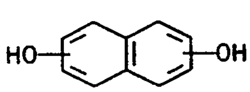

Dihydroxynaphthaline

Von den vorstehend aufgeführten Dihydroxyverbindungen werden vorzugsweise 4,4′-Dihydroxydiphenyl, Bisphenol S und insbesondere Hydrochinon und Bisphenol A verwendet.

Dihalogenverbindungen

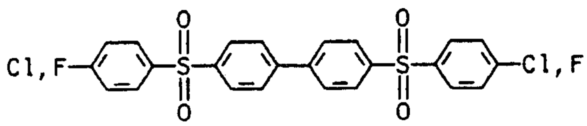

4,4'-Bis-(4-chlorphenylsulfonyl)-diphenyl bzw. 4,4'-Bis-(4-fluorphenylsulfonyl)-diphenyl

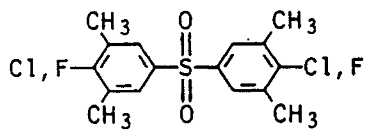

3,3',5,5'-Tetramethyl-4,4'-dichlordiphenylsulfon bzw. -difluordiphenylsulfon

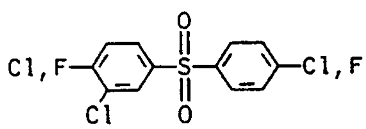

3-Chlor-4,4'-dichlordiphenylsulfon bzw. 3-Chlor-4,4'-difluordiphenylsulfon

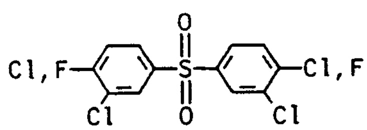

3,3',4,4'-Tetrachlordiphenylsulfon bzw. 3,3'-Dichlor-4,4'-difluordiphenylsulfon

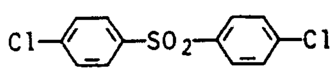

4,4'-Dichlordiphenylsulfon

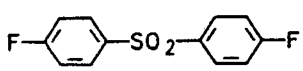

4,4'-Difluordiphenylsulfon

Von den vorstehend genannten Dihalogenverbindungen werden 4,4'-Dichlordiphenylsulfon besonders bevorzugt.

Aminohydroxyverbindungen

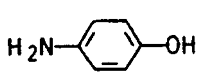

p-Aminophenol

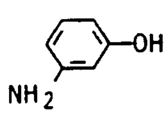

m-Aminophenol

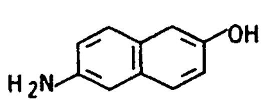

2-Amino-6-hydroxynapthalin

Aminohydroxyverbindungen

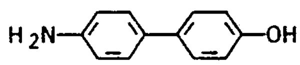

4-Amino-4'-hydroxydiphenyl

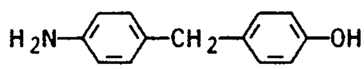

4-Amino-4'-hydroxydiphenyl-methan

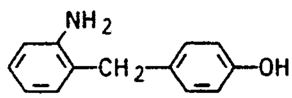

2-Amino-4'-hydroxy-diphenyl methan

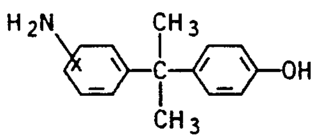

2- bzw. 4-Amino-4'-hydroxy-diphenylpropan-2.2.

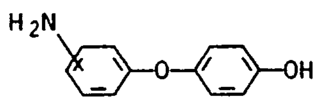

2- bzw. 4-Amino-4'-hydroxy-diphenylether

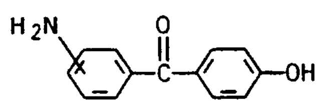

2- bzw. 4-Amino-4'-hydroxy-benzophenon

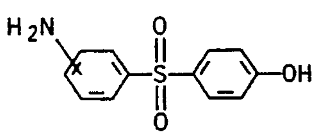

2- bzw. 4-Amino-4'-hydroxy--diphenylsulfon

Von den vorstehend beispielhaft genannten Aminohydroxyverbindungen werden p-Aminophenol, m-Aminophenol, 2- und 4-Amino-4'-hydroxydiphenylpropan-2.2 bevorzugt verwendet. Die Aminohydroxyverbindungen können ferner ebenso wie die beispielhaft genannten Dihydroxy- und Dihalogenverbindungen einzeln oder als Mischungen aus mindestens zwei der genannten Aufbaukomponenten eingesetzt werden.

Zur Herstellung der Polyamidocarbonsäure- bzw. der Polyimidblockcopolykondensate kommen beispielsweise in Betracht:
aromatische Tetracarbonsäuredianhydride, wie

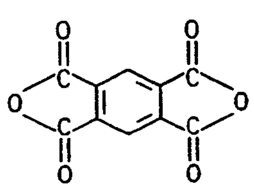

Pyromellitsäuredianhydrid

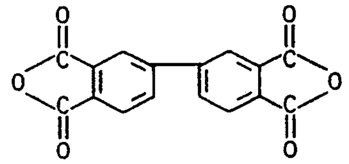

3,3',4,4'-Biphenyltetracarbonsäuredianhydrid

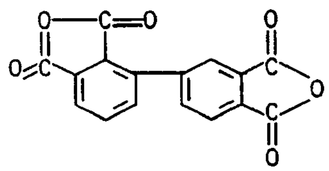

2,3,3',4'-Biphenyltetracarbonsäuredianhydrid

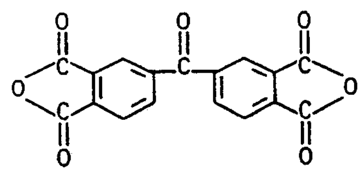

3,3',4,4'-Benzophenontetracarbonsäuredianhydrid

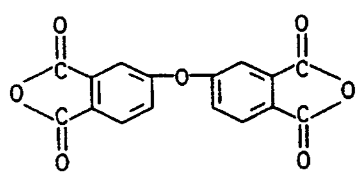

3,3',4,4'-Diphenylethertetracarbonsäuredianhydrid

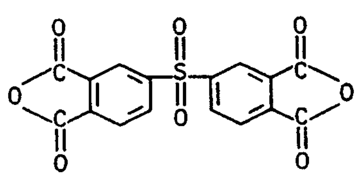

3,3',4,4'-Diphenylsulfontetracarbonsäuredianhydrid

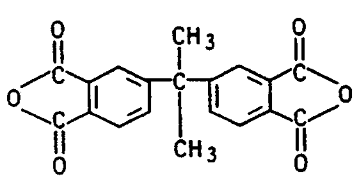

3,3',4,4'-Diphenylpropan-2.2-tetracarbonsäuredianhydrid

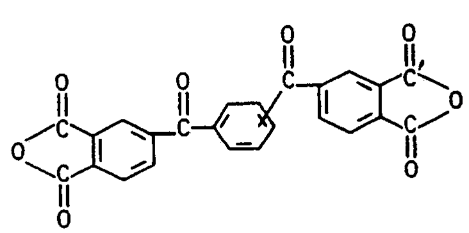

1,4-Bis(3,4-dicarboxybenzoyl)-benzoldianhydrid sowie
1,3-Bis(3,4-dicarboxybenzoyl)-benzoldianhydrid

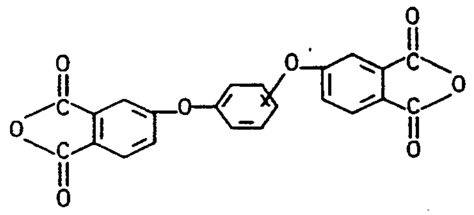

1,4-Bis(3,4-dicarboxyphenoxy)-benzoldianhydrid sowie 1,3-Bis(3,4-dicarboxyphenoxy)-benzoldianhydrid

und aromatische Diamine wie,

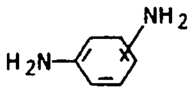

meta- oder para-Phenylendiamin

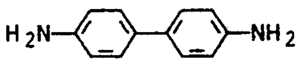

Benzidin

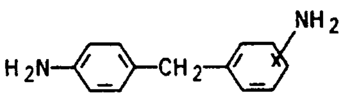

4,4'- oder 2,4'-Diamino-diphenylmethan

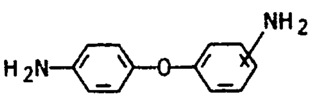

4,4'- oder 2,4'-Diamino-diphenylether

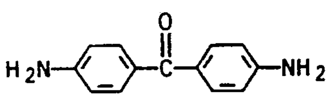

4,4'-Diaminobenzophenon

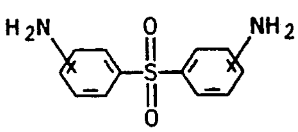

4,4'-Diamino-diphenylsulfon oder 3,3'-Diamino-diphenylsulfon

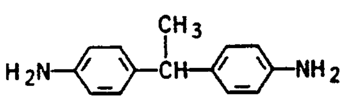

4,4'-Diamino-diphenyl-ethan-1.1

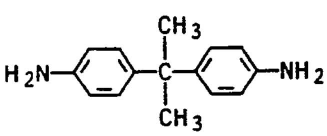

4,4'-Diamino-diphenyl-propan-2.2

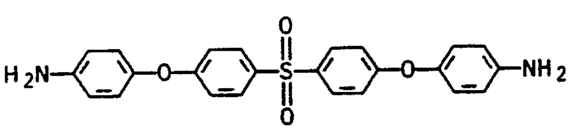

4,4'-Bis(4-aminophenoxy)-diphenyl-sulfon

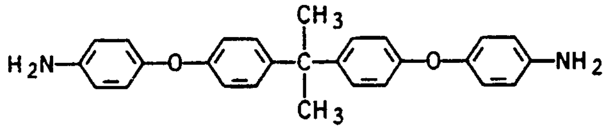

4,4'-Bis(4-aminophenoxy)-diphenyl-propan-2.2

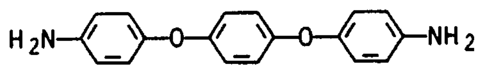

1,4-Bis(4-aminophenoxy)-benzol

sowie die Isomeren
1,4-(3-aminophenoxy-4'-aminophenoxy)benzol,
1,4-Bis(3-aminophenoxy)benzol,
1,3-Bis(4-aminophenoxy)benzol oder
1,3-Bis(3-aminophenoxyl)benzol.

Von den vorstehend genannten aromatischen Tetracarbonsäuredianhydriden werden Pyromellitsäure- und/oder 3,3',4,4'-Benzophenontetracarbonsäure-dianhydrid bevorzugt eingesetzt. Von den aromatischen Diaminen finden vorzugsweise 4,4'-Diamino-diphenylsulfon, 4,4'-Diamino-diphenylpropan-2.2 und insbesondere 4,4'-Diamino-diphenylether Verwendung. Die Tetracarbonsäure-dianhydride und aromatischen Diamine können jeweils einzeln oder als Gemische verwendet werden.

Zur Herstellung der erfindungsgemäßen hochtemperaturbeständigen Polysulfon-Polyimid-Blockcopolykondensate können die verschiedenartigen Polyarylenethersulfonblöcke und unterschiedlichen Polyimidblöcke, solange die Voraussetzungen des Anspruchs 1 erfüllt sind, prinzipiell in beliebiger Weise miteinander kombiniert werden.

Das Gesamtmolekulargewicht der Polysulfon-Polyimid-Blockcopolykondensate liegt im Bereich von 5000 bis 50 000, vorzugsweise von 10 000 bis 40 000 und insbesondere von 15 000 bis 30 000.

Alle vorstehend genannten Molekulargewichtswerte sind Zahlenmittelwerte, wie sie z.B. in E. Vollmert, Grundriß der Makromolekularen Chemie, Bd. 3, S. 122 ff (1979) definiert sind.

Die Verfahrensbedingungen zur Herstellung der Polyarylenethersulfonpolykondensate, insbesondere der aminterminierten Polyarylenethersulfonpolykondensate, wie z.B. Temperatur, Druck, geeignete Lösungsmittel und evtl. Zusätze (Katalysatoren) sind die gleichen, wie sie für statistische Copolykondensate in der EP-A-113 112 und der EP-A-135 130 bzw. für aminterminierte Copolykondensate in der EP-A-107 897 oder US 4 540 748 beschrieben sind, so daß sich hierzu nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als basischer Katalysator.

Die Menge an N-Methylpyrrolidon beträgt im allgemeinen 5 bis 100 Mol, vorzugsweise 5 bis 20 Mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines verminderten Drucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 130 bis 220 °C, vorzugsweise 160 bis 210 °C; die Gesamt-Reaktionsdauer richtet sich nach dem gewünschten Kondensationsgrad, liegt aber im allgemeinen im Bereich von 0,1 bis 15 Stunden in den einzelnen Stufen.

Die Isolierung der aminterminierten Polyarylenethersulfonpolykondensate aus der Lösung kann durch Verdampfen des Lösungsmittels, oder durch Ausfällung mit einem geeigneten Nichtlösungsmittel wie z.B. Wasser, Alkanol u.a. erfolgen.

Zur Herstellung der erfindungsgemäßen Polysulfon-Polyimid-Blockcopolykondensate werden die aminterminierten Polyarylenethersulfonblöcke, aromatischen Diamine und aromatischen Tetracarbonsäuredianhydride nach dem bevorzugt ausgeübten Verfahren in polaren aprotischen Lösungsmitteln bei Temperaturen von 0 bis 50 °C, vorzugsweise von 0 bis 20 °C zu Polyamidocarbonsäuren polykondensiert und diese anschließend bei Temperaturen von 10 bis 50 °C, vorzugsweise von 18 bis 30 °C, vorzugsweise in Gegenwart von aliphatischen, aromatischen oder heterocyclischen tertiären Aminen als Katalysator und zweckmäßigerweise Zusatz von Carbonsäureanhydriden dehydratisiert.

Als geeignete polare aprotische Lösungsmittel seien beispielsweise genannt: N,N-Dimethylformamid, N,N-Dimethylacetamid, N-Methylcaprolactam, Dimethylsulfoxid, Pyridin und vorzugsweise N-Methylpyrrolidon. Die Menge an Lösungsmittel beträgt im allgemeinen 100 bis 200 Mol, vorzugsweise 120 bis 180 Mol, bezogen auf ein Mol Tetracarbonsäuredianhydrid und ein Mol aromatisches Diamin.

Dies ergibt einen bevorzugten Feststoffgehalt der Reaktionslösung von 3 bis 15 Gew.%, insbesondere von 5 bis 10 Gew.%.

Als Katalysatoren kommen z.B. folgende tertiäre Amine in Betracht: Pyridin, 3,4- bzw. 3,5-Lutidin, 3-Methyl-, 4-Methyl-, 4-Isopropyl-, 4-Benzylpyridin, N,N-Dimethylanilin, Chinolin, Isochinolin, Trimethylamin, Triethylamin, N,N-Dimethylbenzylamin, N,N-Dimethyldodecylamin und Triethylendiamin. Die tertiäre Amine werden üblicherweise in einer Menge von 1 bis 10 Molen, vorzugsweise von 3 bis 5 Molen, bezogen auf ein Mol Tetracarbonsäuredianhydrid verwendet.

Als geeignetes Carbonsäureanhydrid zur Dehydratisierung der Polyamidocarbonsäure wird vorzugsweise Acetanhydrid verwendet, das zweckmäßigerweise in einer Menge von 3 bis 15 Mol, insbesondere von 5 bis 10 Mol pro Mol Tetracarbonsäuredianhydrid eingesetzt wird.

Die erfindungsgemäßen hochtemperaturbeständigen Polysulfon-Polyimid-Blockcopolykondensate können analog den Polyarylenethersulfonblöcken durch Verdampfen des Lösungsmittels oder durch Ausfällen mit einem geeigneten Nichtlösungsmittel aus der Reaktionslösung isoliert werden.

Die Produkte zeichnen sich durch ihre verbesserte Lösungsmittelbeständigkeit und mechanische Dauerbelastbarkeit bei erhöhten Temperaturen, z.B. von 180 °C und darüber, aus. Erwähnenswert ist auch ihre Transparenz.

Die erfindungsgemäßen Polysulfon-Polyimid-Blockcopolykondensate können gegebenenfalls mit verstärkend wirkenden Füllstoffen, Pigmenten und anderen Hilfs- und Zusatzstoffen modifiziert werden.

Als verstärkend wirkende Füllstoffe seien beispielsweise Kohle- und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Gläsern mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Formmassen enthalten zwischen 10 und 60 Gew.-%, vorzugsweise 20 bis 50 Gew.-%, des Verstärkungsmittels, bezogen auf das Gesamtgewicht, während die imprägnierten Glasgewebe, -matten und/oder -vliese zwischen 10 und 80 Gew.-%, vorzugsweise zwischen 30 und 60 Gew.-%, Polysulfon-Polyimid-Blockcopolykondensate, bezogen auf das Gesamtgewicht, enthalten. Als Pigmente eignen sich beispielsweise Titandioxid, Cadmiumoxid, Zinksulfid, Bariumsulfat und Ruß. Als andere Zusatz- und Hilfsstoffe kommen beispielsweise in Betracht Farbstoffe, Schmiermittel, wie z.B. Graphit, Polytetrafluorethylen oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl und Bornitrid oder Mischungen dieser Füllstoffe sind verwendbar. Die Pigmente, Zusatz- und Hilfsstoffe werden üblicherweise in Mengen von 0,01 bis 3 Gew.-%, bezogen auf das Gewicht der Polysulfon-Polyimid-Blockcopolykondensate, eingesetzt.

Die erfindungsgemäßen hochtemperaturbeständigen Polysulfon-Polyimid-Blockcopolykondensate finden vorzugsweise Verwendung zur Herstellung von Formkörpern, wobei diese teilweise oder zweckmäßigerweise vollständig aus den Blockcopolykondensaten bestehen.

Die in den nachfolgenden Beispielen angegebene reduzierte Viskosität $\eta$ spec/c der aminterminierten Polyarylenethersulfonpolykondensate wurde bei 25 °C in 1 gew.%iger Lösung in N-Methylpyrrolidon und die der erfindungsgemäßen Polysulfon-Polyimid-Blockcopolykondensate bei 25 °C in 1 gew.%iger Lösung in Pentafluorphenol bestimmt.

Beispiele

Herstellung von Polyarylenethersulfonpolykondensaten mit endständigen primären Aminogruppen

Beispiel 1

Die Reaktionsmischung, bestehend aus
180,91 g (0,63 Mol) 4,4'-Dichlor-diphenylsulfon
136,91 g (0,60 Mol) 4,4'-Dihydroxy-diphenylpropan-2.2
6,62 g (0,0606 Mol) p-Aminophenol,

91,22 g (0,66 Mol) Kaliumcarbonat und
700 ml N-Methylpyrrolidon als Lösungsmittel
wurde unter Begasung mit Stickstoff und unter intensivem Rühren auf 195 °C erhitzt. Das entstandene Kondensationwasser wurde azeotrop mit N-Methylpyrrolidon im Stickstoffstrom innerhalb von 45 Minuten abdestilliert und die Polykondensation bei 195 °C in 6 Stunden zu Ende geführt.

Nach dem Abkühlen der Reaktionsmischung wurde das aminterminierte Polyarylenethersulfonpolykondensat mit Wasser/Methanol im Gewichtsverhältnis 1:1 ausgefällt, abfiltriert, viermal mit jeweils 1000 ml Wasser gewaschen und 12 stundenlang bei 100 °C und unter vermindertem Druck getrocknet.

Das Polykondensat besaß ein Molekulargewicht $\overline{M}$n von 9900, eine reduzierte Viskosität in N-Methylpyrrolidon von 0,19 ml/g und eine Glasübergangstemperatur Tg von 170 °C (gemessen nach DSC).

Beispiel 2

Man verfuhr analog den Angaben des Beispiels 1, verwendete jedoch die folgenden Einsatzstoffe und Mengen:
180,91 g (0,63 Mol) 4,4′-Dichlor-diphenylsulfon,
147,41 g (0,589 Mol) 4,4′-Dihydroxy-diphenylsulfon,
9,09 g (0,083 Mol) p-Aminophenol,
95,84 g (0,693 Mol) Kaliumcarbonat und
700 ml N-Methylpyrrolidon.

Das hergestellte aminterminierte Polyphenylenethersulfonpolykondensat besaß ein Molekulargewicht $\overline{M}$n von 6500, eine reduzierte Viskosität in N-Methylpyrrolidon von 0,13 ml/g und eine Glasübergangstemperatur von 190 °C (gemessen nach DSC).

Herstellung der Polysulfon-Polyimid-Blockcopolykondensate

Beispiel 3

Unter Rühren und Durchleiten von Stickstoff wurden in 1700 ml N-Methylpyrrolidon
49,50 g (0,005 Mol) des gemäß Beispiel 1 hergestellten Polyphenylenethersulfonpolykondensats und
19,02 g (0,095 Mol) 4,4′-Diamino-diphenylether
gelöst. Der Lösung wurden bei 0 °C unter Rühren
22,01 g (0,1 Mol) Pyromellitsäuredianhydrid
hinzugefügt. Die Reaktionsmischung wurde eine Stunde bei 0 °C gerührt, danach unter Rühren auf 25 °C erwärmt und nach 3 Stunden mit einer Mischung aus
80 ml Acetanhydrid und
30 ml Pyridin
versetzt. Das gebildete Polysulfon-Polyimid-Blockcopolykondensat wurde nach 15 Stunden durch Zugabe von 3000 ml Ethanol ausgefällt, abfiltriert, dreimal mit jeweils 1000 ml Wasser gewaschen und bei 100 °C unter vermindertem Druck 24 Stunden lang getrocknet.

Das erhaltene Produkt besaß eine reduzierte Viskosität in Pentafluorphenol von 0,85 ml/g und eine Glasübergangstemperatur Tg von 196 °C (gemessen nach DSC).

Beispiel 4

Zu einer Lösung aus
4,00 g (0,02 Mol) 4,4′-Diamino-diphenylether in 1000 ml N-Methylpyrrolidon
fügte man unter Rühren und Durchleiten von Stickstoff bei 25 °C
5,45 g (0,025 Mol) Pyromellitsäuredianhydrid.

Die erhaltene Reaktionsmischung wurde eine Stunde bei 25 °C gerührt, danach wurden
49,50 g (0,005 Mol) des gemäß Beispiel 1 hergestellten Polyphenylenethersulfonpolykondensate hinzugefügt und zusätzlich 3 Stunden lang gerührt.

Anschließend ließ man zur Dehydratisierung eine Mischung aus 40 ml Acetanhydrid und 20 ml Pyridin in die Reaktionsmischung zu tropfen und rührte noch eine Stunde nach.

Nach 15 Stunden wurde das gebildete Polysulfon-Polyimid-Blockcopolykondensat durch Zugabe von 3000 ml Ethanol ausgefällt, abfiltriert, dreimal mit jeweils 1000 ml Wasser gewaschen und bei 100 °C unter vermindertem Druck 24 Stunden lang getrocknet.

Das erhaltene Blockcopolykondensat besaß eine reduzierte Viskosität in N-Methyl-pyrrolidon von 0,45 ml/g (gemessen als 1 gew.%ige Lösung bei 25 °C) und eine Glasübergangstemperatur Tg von 189 °C (gemessen nach DSC).

Beispiel 5

Man verfuhr analog den Angaben des Beispiels 3, verwendete jedoch die folgenden Einsatzstoffe und Mengen

130,0 g (0,02 Mol) aminterminiertes Polyphenylenethersulfonpolykondensat, hergestellt nach Beispiel 2,
36,04 g (0,18 Mol) 4,4′-Diamino-diphenylether,
64,45 g (0,2 Mol) 3,3′,4,4′-Benzophenontetracarbonsäuredianhydrid,
1000 ml N-Methylpyrrolidon,
80 ml Acetanhydrid und
60 ml Pyridin.

Das erhaltene Polysulfon-Polyimid-Blockcopolykondensat besaß eine reduzierte Viskosität in Pentafluorphenol von 0,79 ml/g und eine Glasübergangstemperatur von 226 °C (gemessen nach DSC).

Bestimmung des in Methylenchlorid löslichen Polykondensatgehaltes

Zur Bestimmung der löslichen Polykondensatanteile wurden die erfindungsgemäß nach den Beispielen 3 bis 5 hergestellten Polysulfon-Polyimid-Blockcopolykondensate sowie als Vergleichssubstanzen Polysulfonpolykondensate, aufgebaut aus Einheiten der Struktur

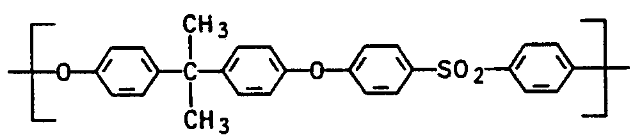
,

abgekürzt PSU genannt, und

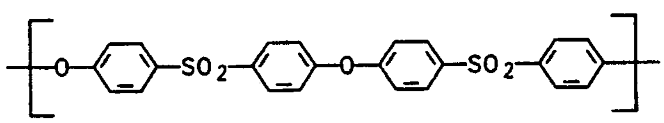
,

abgekürzt PES genannt,
einer Extraktion mit Methylenchlorid unterworfen. Hierzu wurden die Polykondensate in einer Soxhlet-Hülse eingewogen und mit 100 ml Chloroform unter Rückfluß 8 Stunden lang in einem Soxhlet-Extraktor extrahiert. Die polykondensathaltige Hülse wurde getrocknet, ausgewogen und der lösliche Polykondensatanteil berechnet.

Hierbei wurden folgende Meßergebnisse ermittelt

| Polykondensat | in Methylenchlorid löslicher Polykondensatanteil [Gew.%] |
|---|---|
| nach Beispiel 3 | 25 |
| nach Beispiel 4 | 12 |
| nach Beispiel 5 | 32 |
| PSU | 100 |
| PES | 100 |

Durch Einkondensieren der Polyimidblöcke konnte der in Methylenchlorid lösliche Polysulfon-Polyimid-Blockcopolykondensatgehalt im Vergleich zu Polysulfonpolykondensaten erheblich reduziert und dadurch die Spannungsrißanfälligkeit der Produkte deutlich verbessert werden.

## Ansprüche

1. Hochtemperaturbeständige Polysulfon-Polyimid-Blockcopolykondensate, enthaltend, bezogen auf die Summe von (A) und (B),

A) 5 bis 95 Mol-% Polyarylenethersulfonblöcke mit einem Zahlenmittelwert des Molekulargewichts $\overline{M}_n$ im Bereich von 1 500 bis 30 000, aufgebaut aus Einheiten der allgemeinen Formel (I)

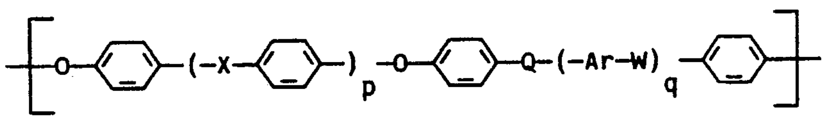

(I)

oder deren am Arylenrest mit Phenyl-, $C_1$-$C_6$-Alkyl- oder $C_1$-$C_6$-Alkoxygruppen, Chlor- oder Fluoratomen substituierten Derivate, wobei bedeuten:
Ar einen p-Phenylen- oder Diphenylenrest,
X, Q und W eine chemische Bindung oder gleiche oder verschiedene Brückenglieder aus der Gruppe $-SO_2$, -O-, -S-, -CO- oder $-CR^1R^2-$ mit der Maßgabe, daß mindestens eines der Brückenglieder $-SO_2-$ ist,
$R^1$ und $R^2$ gleich oder verschieden und jeweils Wasserstoffatome, $C_1$-$C_6$-Alkyl-, $C_1$-$C_6$-Alkoxygruppen, Phenylgruppen oder ihre Fluor- oder Chlorderivate sind, und
p und q jeweils den Wert 0 oder 1 haben
und

B) 5 bis 95 Mol-% Polyimidblöcke mit einem Zahlenmittelwert des Molekulargewichts $\overline{M}_n$ von 300 bis 20 000, aufgebaut aus Einheiten der Formeln

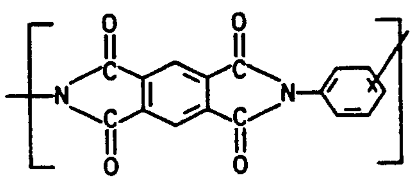

(II)

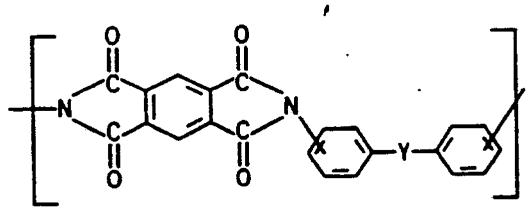

(III)

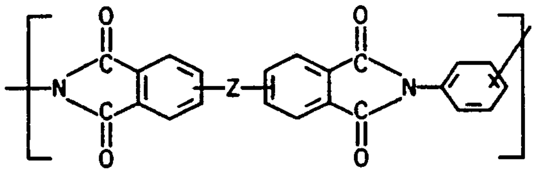

(IV)

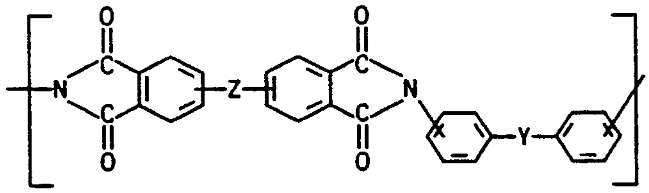

(V)

oder von Mischungen aus mindestens zwei verschiedenen Einheiten der Formeln (II) bis (V), wobei in den Formeln (III) bis (V) bedeuten:
Y eine chemische Bindung oder ein Brückenglied aus der Gruppe -O-, $-CH_2-$, $-C(CH_3)_2-$, $-CH(CH_3)-$, -CO-, $-SO_2-$,

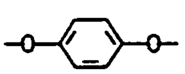 , 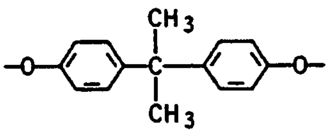 oder 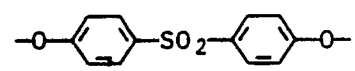 ,

Z eine chemische Bindung oder ein Brückenglied aus der Gruppe -O-, $-CH_2-$, $-C(CH_3)_2-$, -CO-, $-SO_2-$

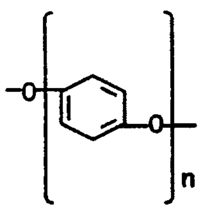 oder 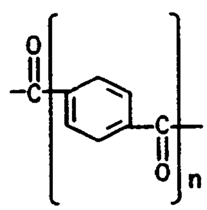

und
n die Zahl 1 oder 2.

2. Hochtemperaturbeständige Polysulfon-Polyimid-Blockcopolykondensate nach Anspruch 1, bestehend, bezogen auf die Summe von (A) und (B), aus
A) 5 bis 95 Mol-% Polyarylenethersulfonblöcken der Formel I und
B) 5 bis 95 Mol-% mindestens eines Polyimidblocks der Formeln (II) bis (V).

3. Hochtemperaturbeständige Polysulfon-Polyimid-Blockcopolykondensate nach einem der Ansprüche 1 bis 2, dadurch gekennzeichnet, daß die Polyarylenethersulfonblöcke (A) aufgebaut sind aus mindestens einer der folgenden Einheiten

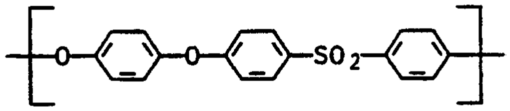

(I1)

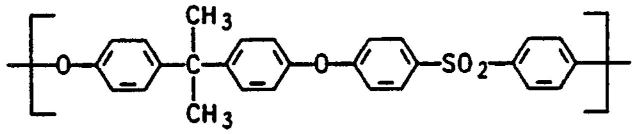

(I2)

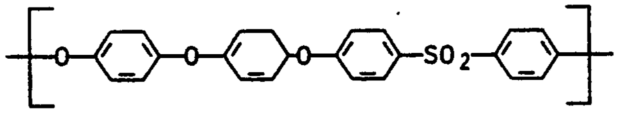

(I3)

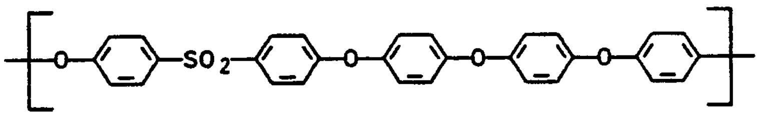

(I4)

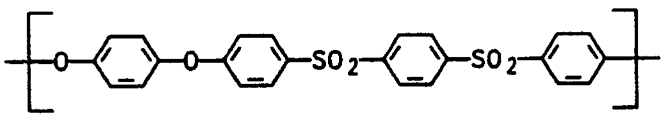

(I5)

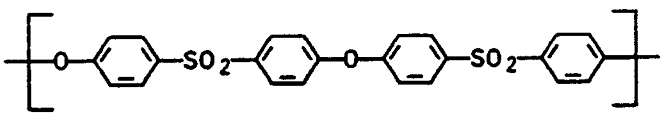

(I6)

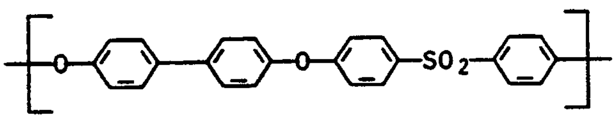

(I7)

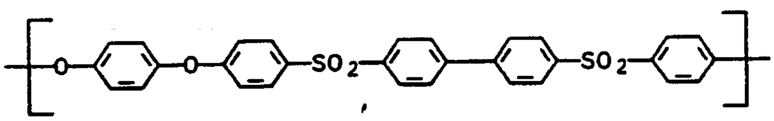

(I8)

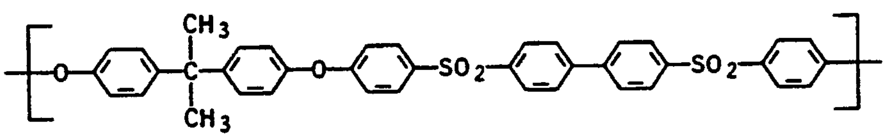

(I9)

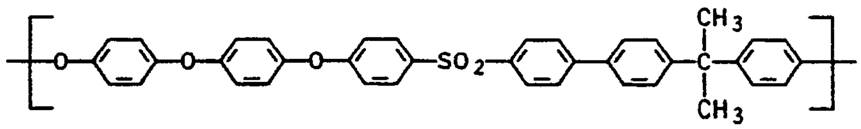
(I10)

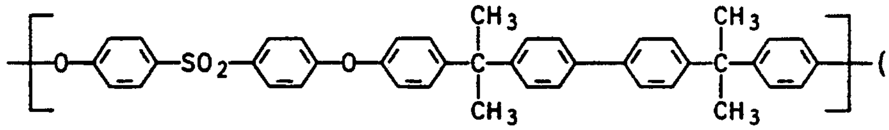
(I11)

und

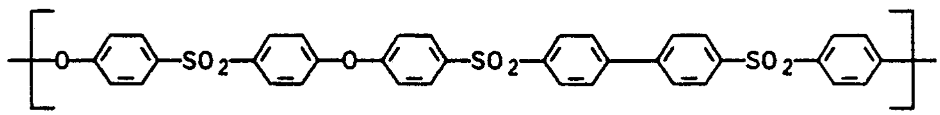
(I12)

4. Hochtemperaturbeständige Polysulfon-Polyimid-Blockcopolykondensate nach einem der Ansprüche 1 bis 2, dadurch gekennzeichnet, daß die Polyarylenethersulfonblöcke (A) aufgebaut sind aus Einheiten der Formeln

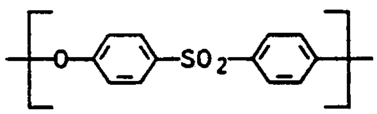
(I6)

und/oder

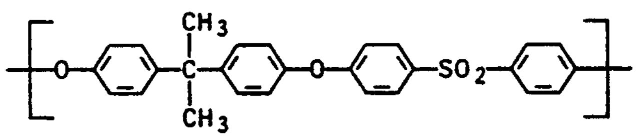
(I2)

wobei die Copolykondensate aus (I6) und (I2) die Einheiten (I6) und (I2) in statischer Verteilung oder in Form von Blöcken gebunden enthalten.

5. Hochtemperaturbeständige Polysulfon-Polyimid-Blockcopolykondensate nach einem der Ansprüche 1 bis 3, dadurch gekennzeichnet, daß die Polyimidblöcke (B) aufgebaut sind aus mindestens einer der folgenden Einheiten der Formeln

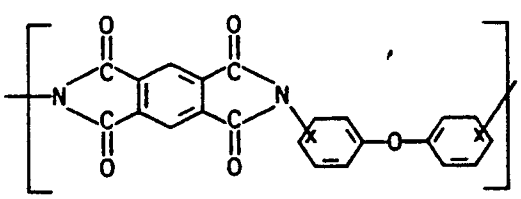
(III1)

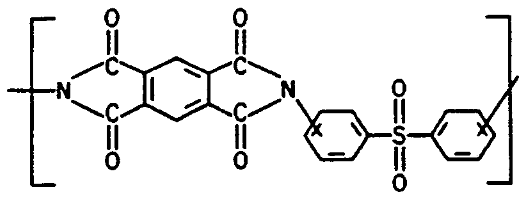

(III2)

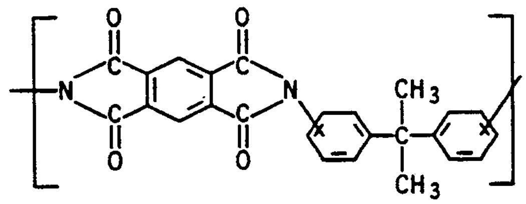

(III3)

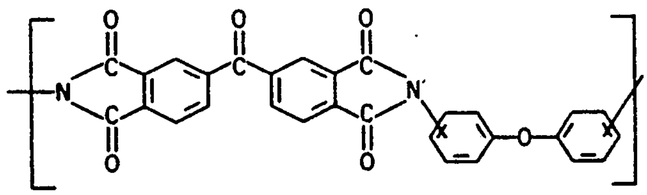

(V1)

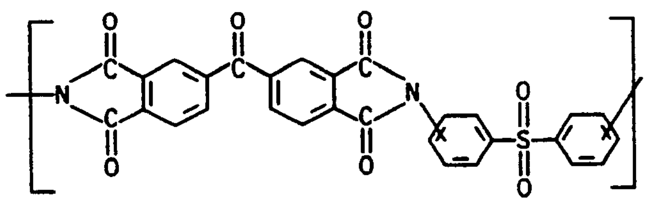

(V2)

und

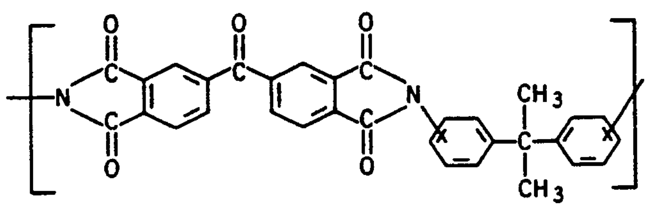

(V3)

6. Hochtemperaturbeständige Polysulfon-Polyimid-Blockcopolykondensate nach einem der Ansprüche 1 bis 3, dadurch gekennzeichnet, daß die Polyimidblöcke (B) aufgebaut sind aus Einheiten der Formeln

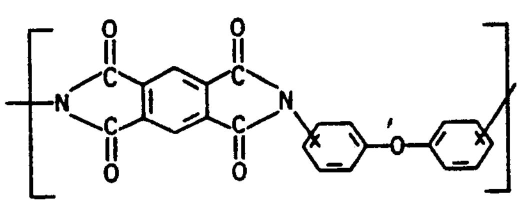

(III1)

und/oder

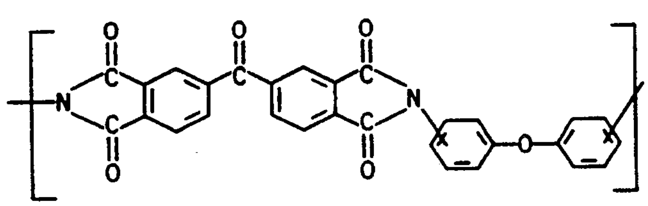

(V1)

7. Verfahren zur Herstellung von hochtemperaturbeständigen Polysulfon-Polyimid-Blockcopolykondensaten, dadurch gekennzeichnet, daß
a) durch Polykondensation von aromatischen Dihalogenverbindungen, aromatischen Dihydroxyverbindungen der Formeln

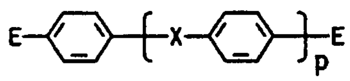

(Ia),

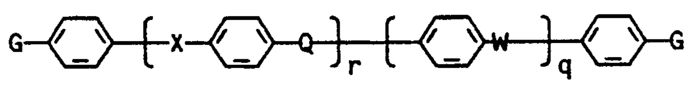

(Ib)

oder von Mischungen von Verbindungen der Formeln (Ia) und (Ib) und aromatischen Aminohydroxyverbindungen der Formel

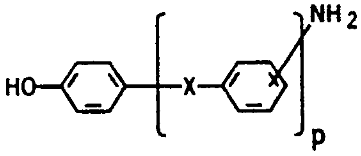

(Ic),

wobei bedeuten:
X, Q und W eine chemische Bindung oder gleiche oder verschiedene Brückenglieder aus der Gruppe $-SO_2-$, -O-, -S-, -CO- oder $-CR^1R^2-$ mit der Maßgabe, daß mindestens eines der Brückenglieder $-SO_2-$ ist,
$R^1$ und $R^2$ gleich oder verschieden und jeweils Wasserstoffatome, $C_1$-$C_6$-Alkyl-, $C_1$-$C_6$-Alkoxygruppen, Phenylgruppen oder ihre Fluor- oder Chlorderivate sind,
p, q und r jeweils den Wert 0 oder 1 haben,
E und G Hydroxyl, Chlor oder Fluor sind mit der Maßgabe, daß das Verhältnis von Hydroxylendgruppen zu Chlor- und/oder Fluorendgruppen im Bereich von 0,9:1 bis 1,1:1 liegt,
in polaren aprotischen Lösungsmitteln in Gegenwart von Alkalimetallcarbonaten Polyarylenethersulfonpolykondensate (A) mit endständigen Aminogruppen hergestellt werden und
b) an diese aminterminierten Polyarylenethersulfonpolykondensate (A) Polyimidblöcke (B) ankondensiert werden durch Umsetzung mit aromatischen Tetracarbonsäuredianhydriden der Formeln

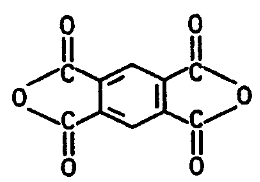

(IIa),

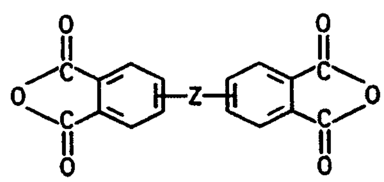

(IVa)

oder von Mischungen aus aromatischen Tetracarbonsäuredianhydriden der Formeln (IIa) und (IVa) und aromatischen Diaminen der Formeln

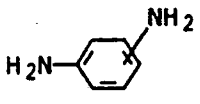 (IIb),

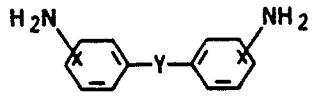 (IIIb)

oder von Mischungen aus aromatischen Diaminen mit den Formeln (IIb) und (IIIb), wobei in den Formeln (IVa) und (IIIb) bedeuten:
Y eine chemische Bindung oder ein Brückenglied aus der Gruppe -O-, $-CH_2-$, $-C(CH_3)_2-$, $-CH(CH_3)-$, -CO-, $-SO_2-$,

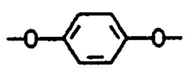 , 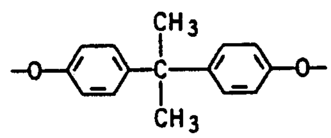 oder 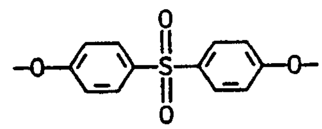 ,

Z eine chemische Bindung oder ein Brückenglied aus der Gruppe -O-, $-CH_2-$, $-C(CH_3)_2-$, -CO-, $-SO_2-$

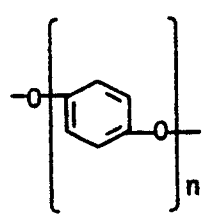 oder 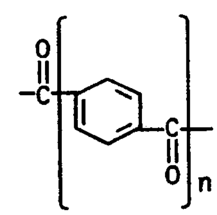

und
n die Zahl 1 oder 2
und das Molverhältnis von aromatischen Tetracarbonsäuredianhydriden zu aromatischen Diaminen 1,02:1 bis 2:1 beträgt,
in polaren aprotischen Lösungsmitteln und anschließender Dehydratisierung der intermediär gebildeten Polysulfon-Polyamidcarbonsäure-Blockcopolykondensate.

8. Verfahren nach Anspruch 7, dadurch gekennzeichnet, daß das Molverhältnis von aromatischen Dihydroxyverbindungen zu aromatischen Aminohydroxyverbindungen 61,5:1 bis 1,5:1 beträgt.

9. Verfahren nach Anspruch 7, dadurch gekennzeichnet, daß das Verhältnis von Anhydridgruppen der Tetracarbonsäuredianhydride zu Aminogruppen der aromatischen Diamine und aminterminierten Polyarylenethersulfonpolykondensate 0,9:1 bis 1,1:1 beträgt.

10. Verfahren nach Anspruch 7, dadurch gekennzeichnet, daß die Polyimidbildung durch Dehydratisierung der Polysulfon-Polyamidcarbonsäure-Blockcopolykondensate mit mindestens einem Carbonsäureanhydrid, vorzugsweise Acetanhydrid, in Gegenwart von tertiären Aminen als Katalysator durchgeführt wird.

11. Verfahren nach Anspruch 7, dadurch gekennzeichnet, daß die Polykondensation zur Bildung der Polyarylenethersulfonpolykondensate mit endständigen Aminogruppen (A) bei Temperaturen im Bereich von 130 bis 220 °C, die Herstellung der Polysulfon-Polyamidcarbonsäure-Blockcopolykondensate bei Temperaturen im Bereich von 0 bis 50 °C und die Dehydratisierung zu Polysulfon-Polyimid-Blockcopolykondensaten bei Temperaturen im Bereich von 10 bis 50 °C durchgeführt werden.

12. Verwendung der hochtemperaturbeständigen Polysulfon-Polyimid-Blockcopolykondensate nach einem der Ansprüche 1 bis 6 zur Herstellung von Formkörpern.

13. Formkörper, enthaltend hochtemperaturbeständige Polysulfon-Polyimid-Blockcopolykondensate nach einem der Ansprüche 1 bis 6.

14. Formkörper, bestehend im wesentlichen aus hochtemperaturbeständigen Polysulfon-Polyimid-Blockcopolykondensaten nach einem der Ansprüche 1 bis 6.